## Europäisches Patentamt
## European Patent Office
## Office européen des brevets

(19)

(11) Veröffentlichungsnummer : **0 471 700 B1**

(12) **EUROPÄISCHE PATENTSCHRIFT**

(45) Veröffentlichungstag der Patentschrift :
28.09.94 Patentblatt 94/39

(51) Int. Cl.$^5$ : **H04N 9/78**

(21) Anmeldenummer : **90906923.9**

(22) Anmeldetag : **08.05.90**

(86) Internationale Anmeldenummer :
**PCT/EP90/00738**

(87) Internationale Veröffentlichungsnummer :
**WO 90/13978 15.11.90 Gazette 90/26**

(54) ZWEIZEILENKAMMFILTERUNG MIT RÄUMLICHER MISCHUNG.

(30) Priorität : **09.05.89 US 349192**

(43) Veröffentlichungstag der Anmeldung :
**26.02.92 Patentblatt 92/09**

(45) Bekanntmachung des Hinweises auf die
Patenterteilung :
**28.09.94 Patentblatt 94/39**

(84) Benannte Vertragsstaaten :
**DE FR NL**

(56) Entgegenhaltungen :
**EP-A- 0 161 923**
**IEEE TRANSACTIONS ON CONSUMER ELEC-**
**TRONICS, vol. CE-33, No. 3, August 1987,**
**IEEE, (New York, US), Y. Nishigori et al.: "A**
**two dimensional adaptive digital decoder for**
**color television signals" pages 91 -96**
**PATENT ABSTRACTS OF JAPAN, vol. 12, No.**
**493 (E-697)(3340), 22 December 1988, & JP, A.**
**63206090**

(73) Patentinhaber : **Deutsche ITT Industries GmbH**
**Hans-Bunte-Strasse 19**
**D-79108 Freiburg (DE)**
Patentinhaber : **ZENITH ELECTRONICS**
**CORPORATION**
**Zenith Center**
**1000 Milwaukee Avenue**
**Glenview Illinois 60025 (US)**

(72) Erfinder : **KHOSRO, Rabii**
**3827 Galena Crt.**
**Arlington Heights, IL 60004 (US)**
Erfinder : **KOHNE, Heinrich**
**Böhlackerstrasse 7**
**D-7801 Vβrstettenn 13 (DE)**

(74) Vertreter : **Klunker . Schmitt-Nilson . Hirsch**
**Winzererstrasse 106**
**D-80797 München (DE)**

EP 0 471 700 B1

## Beschreibung

Die Erfindung bezieht sich auf ein Verfahren und eine Schaltungsanordnung zur Farb-Video-Signalverarbeitung, insbesondere zur Verarbeitung von Farbfernsehsignalen nach dem NTSC-Standard.

Beim NTSC-Standard wird die Phase des Farbsignals in aufeinanderfolgenden Zeilen um 180 Grad gedreht und damit invertiert. Diese Bedingung eignet sich zur Trennung der Helligkeitskomponenten von den Farbkomponenten mittels des bekannten Kammfilterverfahrens. Der Einfachheit halber wird im folgenden Helligkeit mit "Luma" und Farbe mit "Chroma" bezeichnet. Bei der Kammfilterung werden aufeinanderfolgende Zeilen des Videosignals miteinander addiert und subtrahiert. Die Addition liefert die Luma-Signalkomponente (die Chroma-Komponenten weisen entgegengesetzte Phasen auf und werden dadurch bei der Addition ausgelöscht) und die Subtraktion liefert die Chroma-Signalkomponente (die Luma-Komponenten werden bei der Subtraktion ausgelöscht, weil deren Phasen immer gleich sind.) Durch die Kammfilterung wird eine qualitativ hochwertige Trennung von Chroma- und Luma-Signal erreicht, mit Ausnahme dort, wo sich das Luma- oder Chroma-Signal von Zeile zu Zeile deutlich geändert hat. In diesen Fällen bewirkt die Kammfilterung Signalverzerrungen und Bild-Artefakte, weil ungleiche Informationen miteinander kombiniert werden.

Bei der Farbsignalverarbeitung ohne Kammfilterung, die im folgenden als Einfachdekodierung bezeichnet wird, wird das Luma-Chroma-Signalgemisch über eine selektive Farbhilfsträger-Frequenzfalle (= Farbfalle) geführt, um die Luma-Komponente zu gewinnen, und es wird über einen Farbbereich-Bandpass geführt, um die Chroma-Komponente zu gewinnen. Die bei 3,58 MHz liegende Farbfalle unterdrückt notwendigerweise die Luma-Auflösung in diesem Frequenzbereich. Der Farbbereich-Bandpass mit der Mittenfrequenz von 3,58 MHz läßt andererseits innerhalb seines Durchlaßbereiches auch Luma-Signalanteile passieren, die sich mit den Chroma-Komponenten mischen und so falsche Farben erzeugen. Der Vorzug der Kammfilterung besteht darin, daß die Luma-Auflösung in der Nachbarschaft der Farbhilfsträgerfrequenz nicht reduziert und die Farbdekodierung nicht durch Luma-Signalanteile gestört wird. Andererseits erzeugt die Kammfilterung von Videosignalen, die vertikal deutliche Übergänge, insbesondere Farbübergänge, aufweisen, verschiedene Arten von Bildfehlern, die einen Betrachter sehr stören können.

Eine gewisse Abhilfe gegenüber diesen Störeffekten bewirkt das bekannte "Zweizeilen-Kammfilter", welches die Videosignale von 3 horizontalen Zeilen miteinander kombiniert, z.B. die betroffene Zeile, eine Zeile darüber und eine Zeile darunter. Eine Luma/Chroma-Trennung über eine Kammfilterung erfolgt bei diesem Zweizeilen-Kammfilter lediglich dann, wenn vertikal keine Signalübergänge vorhanden sind. Wenn die vertikalen Signalübergänge größer als ein vorgegebener Wert sind, der beispielsweise durch eine Rauschunterdrückungsschwelle festgelegt ist, dann wird keine Signalkämmung ausgeführt. Die bekannte Schaltung tastet vertikal ausgerichtete Bildpunkte der oberen und der unteren Zeile ab und vergleicht die Abtastwerte mit einem Vergleichswert, der aus den Abtastwerten horizontal liegender Bildpunkte gebildet wird und trifft darauf eine Entscheidung, ob eine "Zweizeilen-Kammfilterung" (obere und untere Zeile mit der mittleren Zeile) oder eine einfache Videosignaldekodierung stattfinden soll. Der abgetastete Videosignalbereich schließt sieben Bildpunkte ein; dabei werden fünf benachbarte Bildpunkte der horizontalen Zeile, ein Bildpunkt der darüberliegenden Zeile und ein Bildpunkt der darunterliegenden Zeile miteinander verglichen. Im wesentlichen findet der Vergleich dabei allein mit der Chroma-Komponente der Bildpunkte statt, den das Videosignal ist zuvor mittels eines Farbbereich-Bandpasses gefiltert worden.

Die Entscheidung, entweder eine Zweizeilen-Kammfilterung oder eine einfache Dekodierung durchzuführen, richtet sich nach dem Vergleich der Differenzen zwischen den beiden in vertikaler Richtung angeordneten Bildpunkten der oberen und unteren Zeile und der Differenz zwischen den äußeren Bildpunkten der in horizontaler Richtung (= Zeile) angeordneten Bildpunkte. Die bekannte Schaltung erfaßt somit lediglich die zwei Hauptrichtungen in der Nachbarschaft des zu verarbeitenden Bildpunktes. Dem System fehlt z.B. ein diagonaler Vergleich der Bildpunkte und es ist dadurch in seiner Unterscheidungsfähigkeit, ob eine Kammfilterung zulässig ist, beschränkt. Infolgedessen entstehen auch hierbei oft unerwünschte Bild-Artefakte, weil in vielen kritischen Situationen eine Kämmung auch dann stattfindet, wenn die mittlere Zeile unterschiedlich von der oberen und unteren Zeile ist. Zusätzlich ist die bekannte Schaltung in hohem Maße rauschempfindlich, weil die Rauschunterdrückungsschwelle fest ist und sich dem empfangenen Videosignal nicht anpaßt.

Es ist daher Aufgabe der in den Ansprüchen gekennzeichneten Erfindung ein Verfahren und eine Schaltungsanordnung anzugeben, die eine verbesserte Kammfilterung ermöglichen.

Der Hauptgedanke der Erfindung besteht dabei darin, über verbesserte Ähnlichkeitskriterien des ungefilterten Bildpunktumfeldes einen ebenfalls verbesserten Entscheidungsprozeß für das Trennungsverfahren zu steuern, wobei für jeden Bildpunkt die jeweilige Trennungsart (= unterschiedliche Kammfilterverfahren), das Mischungsverhältnis aus Kammfiltertrennung und Einfachdekodierung und schließlich die Trennungsentscheidung einer Anzahl vorausgehender Bildpunkte berücksichtigt wird.

Nach der Erfindung werden die Ähnlichkeitskriterien aus Gradienten des Videosignals abgeleitet, die in einer verhältnismäßig großen Bildzone um den zu verarbeitenden Bildpunkt bestimmt werden. Die Signaländerungen in vertikaler Richtung werden dabei durch diagonal liegende Gradienten erfaßt, indem diagonal benachbarte Bildpunkte gleicher Phasenlage miteinander verglichen werden. Logische Steuerschaltungen bestimmen, ob eine Kammfilterung des Videosignals stattfinden soll oder nicht und welche Art von Kammfilterung ausgeführt werden soll.

Erfindungsgemäß wird für jeden Bildpunkt eine Verarbeitungsentscheidung durchgeführt, die auf einer Gradientenanalyse eines Auswertungsfeldes beruht, die elf Bildpunkte einschließt. Der eigentlich zu verarbeitende Bildpunkt liegt dabei im Zentrum des Auswertungsfeldes. Die jeweilige Verarbeitungsentscheidung wird dann gegebenenfalls aufgrund bereits vorliegender Verarbeitungsentscheidungen, die für die benachbarten Bildpunkte durchgeführt worden sind, modifiziert.

Die Berücksichtigung vorausgehender und nachfolgender Bildpunkte für die Verarbeitungsentscheidungen erfordert eine Speicherung der Bildpunkte und der Verarbeitungsentscheidungen. In dem bevorzugten Ausführungsbeispiel werden die gespeicherten Bildpunkte und die Verarbeitungsentscheidungen logisch miteinander kombiniert, um die jeweilige Verarbeitungsart zu bestimmen:

- Kämmung über alle drei Zeilen = Zweizeilen-Kammfilterung = 2H-COMB,
- Kämmung über die mittlere und obere Zeile = obere Kammfilterung = U-COMB,
- Kämmung über die mittlere und untere Zeile = untere Kammfilterung = L-COMB,
- einfache Dekodierung = S-DEC und schließlich
- der jeweilige Signalanteil aus Kämmung und Einfachdekodierung.

Ein wichtiger Vorteil der Kammfilterung nach der Erfindung besteht darin, daß Rauscheffekte bei der Bildwiedergabe reduziert sind, weil das Rauschen über einen größeren Bildbereich gemittelt wird, und daher die Entscheidung der jeweils richtigen Kammfilterung weniger stört. Zudem wird die Gradientenanalyse mit ungefilterten Bildpunktwerten durchgeführt, wodurch keine Information für den Entscheidungsprozeß verloren geht.

Die Erfindung und weitere sich daraus ergebende Vorteile werden nun anhand der Figuren der Zeichnung näher erläutert:

Fig.1 zeigt ein vereinfachtes Blockschaltbild mit den einzelnen Funktionseinheiten der Erfindung,

Fig.2 zeigt schematisch die Darstellung eines Bildausschnittes mit verschiedenen abgetasteten Bildpunkten im Zusammenhang mit einem Auswertungsfeld nach der Erfindung,

Fig. 3 zeigt schematisch als Blockschaltbild die Gradienten-Meßeinrichtung,

Fig.4 zeigt schematisch als Blockschaltbild die Gruppen-Entscheidungslogik,

Figuren 5A-5D enthalten Flußdiagramme für die Verarbeitungsentscheidungen, wobei die Flußdiagramme vom logischen Zustand von Zustandssignalen abhängig sind,

Fig.6 zeigt mittels einer Funktionstabelle die Zuordnung erster logischer Steuersignale zu unterschiedlichen Verarbeitungsprozessen,

Fig.7 zeigt mittels einer Funktionstabelle die Zuordnung zweiter logischer Steuersignale zu Verhältnisanteilen von Kämmung und Einfachdekodierung und

Fig.8 zeigt schematisch als Blockschaltbild die Luma-Chroma-Trenneinrichtung mit den beiden Signalmischern für das Luma- und das Chroma-Ausgangssignal.

Beschreibung des bevorzugten Ausführungsbeispiels:

Es wird darauf hingewiesen, daß das bevorzugte Ausführungsbeispiel in Verbindung mit einem üblichen NTSC-Farbfernsehsystem beschrieben ist; der Grundgedanke der Erfindung ist jedoch in gleicher Weise wegen der ähnlichen Farbsignaldecodierung auch auf PAL-Farbfernsehsysteme anwendbar. Im NTSC-Farbfernsehsystem, ist die Chroma-Signal-Phase in aufeinanderfolgenden Zeilen um 180 Grad gedreht, also invertiert - die Luma-Phase bleibt unverändert. Durch Kämmung, also durch Addition und Subtraktion benachbarter Zeilen, kann die Chroma- von der Luma-Komponente getrennt werden. Indessen verursachen Luma- oder Chroma-Signalübergänge, die in vertikaler Richtung liegen, Schwierigkeiten und erzeugen Bild-Artefakte. Bei horizontalen Signalübergängen, also bei vertikalen Bildkanten, werden Perlschnureffekte (= dot crawl) und sehr weiche vertikale Farbkanten erzeugt. Bei vertikalen Signalübergängen, also bei horizontalen Bildkanten, wird eine andere Kantenstörung (= hanging dots) erzeugt, die auch als "Sägekante" bezeichnet wird.

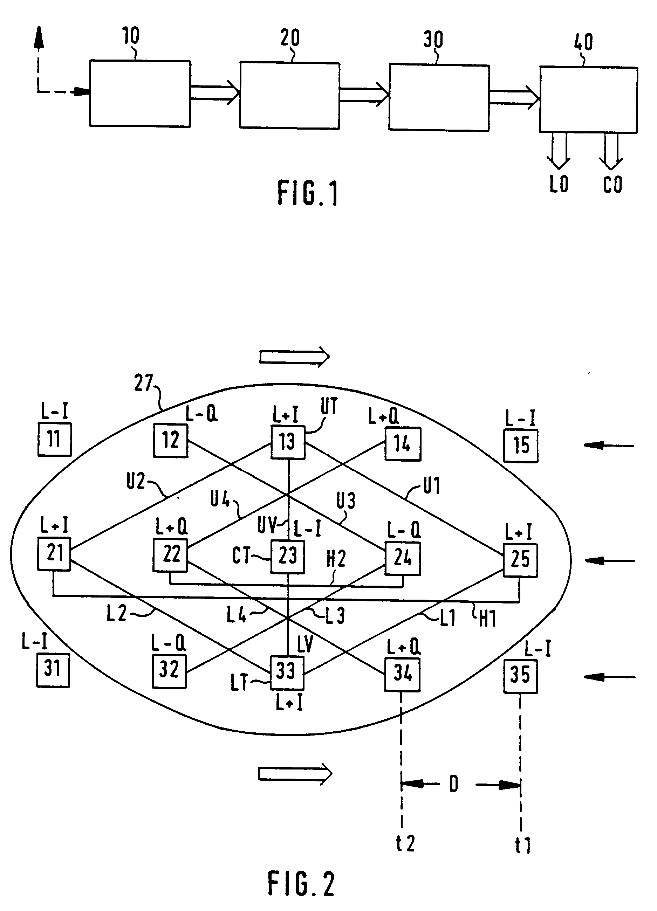

Die Erfindung ermöglicht eine genaue Analyse des jeweiligen Bildpunkt-Umfeldes im gesamten Bildschirm-Wiedergabebereich, der typischerweise aus 483 sichtbaren horizontalen Zeilen von jeweils 910 Bildpunkten besteht. Wie in Fig.1 dargestellt wird, speist eine Videosignalquelle 10 die einzelnen Bildpunkte in einen Block 20 ein, der eine Gradienten-Meßeinrichtung darstellt und an den in Signalflußrichtung ein Block 30 angeschlossen ist, der die Gruppen-Entscheidungslogik durchführt. Diese Gruppen-Entscheidungs-Logik ist von einem Block 40 gefolgt, der als Luma-Chroma-Trenneinrichtung mit Signalmischern bezeichnet wird. Der Ausgang dieses Mischers liefert die getrennten Luma- und Chroma-Komponenten LO, CO.

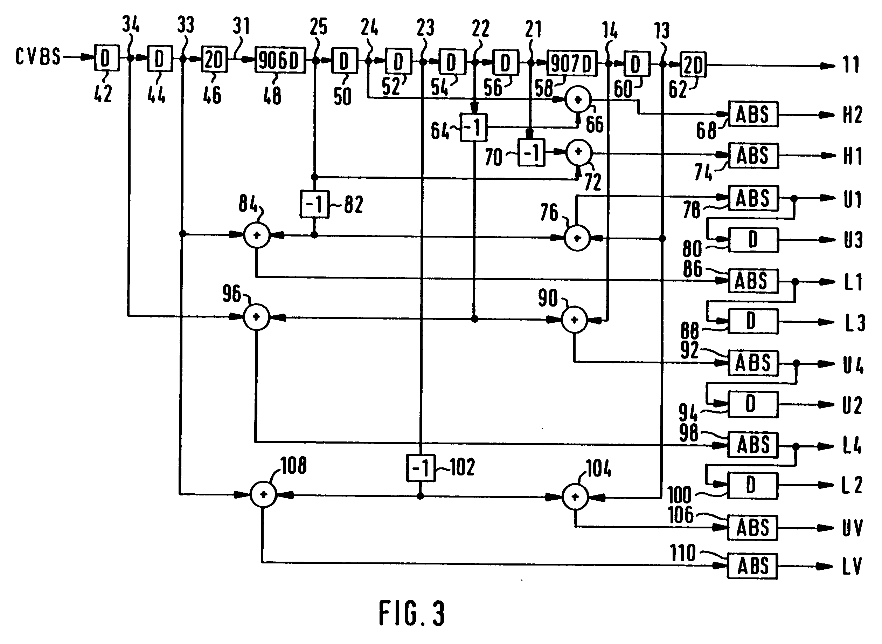

Um die Verarbeitung eines Bildpunktes von Videosignalen abhängig zu machen, die in der vorausgehenden Zeile oder in der nachfolgenden Zeile auftreten, ist eine Speichereinrichtung erforderlich. Die Schaltungsanordnung nach Fig.3 weist daher eine Reihe von Verzögerungsschaltkreisen auf, die zusammen die Speicherung von zwei Zeilen und zwei Bildpunkten ermöglichen, also zusammen eine Speicherung von 1822 Bildpunkten. Statt der Verzögerungsschaltkreise können selbstverständlich auch Schreib/Lesespeicher mit wahlfreiem Zugriff und einer angepaßten Adressensteuerung verwendet werden. Das der Gradientenermittlung dienende Auswertungsfeld 27 umfaßt elf Bildpunkte, die sich über drei horizontale Zeilen erstrecken, vgl. Fig.2.

Die Fig.2 zeigt schematisch in der Form eines vergrößerten Bildschirmausschnittes das Auswertungsfeld 27, das einen Teil von drei horizontalen Zeilen einschließt. Die einzelnen Quadrate stellen Bildpunkte dar und sind zur Verdeutlichung durchnummeriert: 11 bis 15 in der oberen Zeile, 21 bis 25 in der mittleren Zeile und schließlich 31 bis 35 in der unteren Zeile, wobei in der Darstellung der Bildpunkt 35 der "jüngste" Bildpunkt ist. Oberhalb der Bildpunkte werden in großen Buchstaben die zugehörigen Signalkomponenten angegeben, wobei "L" für die Luma-Komponente und "I" und "Q" für die "In-Phasen"- bzw. die "Quadratur-Phasen-Komponente des Chroma-Signals stehen. Ein positives oder negatives Vorzeichen gibt dabei an, ob das jeweilige Chroma-Signal in richtiger oder in invertierter Phasenlage vorliegt. Der Zusammenhang zwischen der Luma-Komponente L und den beiden Quadraturkomponenten I, Q des Chroma-Signals ergibt sich aus dem NTSC-Standard, wobei sich die Phasenbeziehungen besonders einfach darstellen (wie in Fig.2), wenn die Abtastrate viermal so hoch ist wie die Farbhilfsträgerfrequenz, also 4 x 3,58 MHz. Die unmittelbar übereinanderstehenden Bildpunkte zweier aufeinanderfolgender Zeilen haben somit eine entgegengesetzte Chromasignal-Phasenlage.

Das Auswertungsfeld 27 bewegt sich synchron zur Zeilenablenkung von links nach rechts auf dem Bildschirm, so daß die zum Zeitpunkt t1 in die Felder 15, 25 und 35 einlaufende Videosignale sich eine Abtastperiode D später zum Zeitpunkt t2 in den nebenstehenden Feldern 14, 24, 34 usw. befinden. Die Bildinformation wandert somit gleichsam von rechts nach links durch das Auswertungsfeld 27. Das Auswertungsfeld 27 läßt sich somit anschaulich in Form einer horizontal liegenden Verzögerungskette realisieren, in die das abgetastete Videosignal auf der rechten oder linken Seite eingespeist wird. Die Bildpunkte entsprechen dabei dem Inhalt der einzelnen Verzögerungsstufen, vgl. Fig.3.

Die drei zentral übereinanderstehenden Bildpunkte 13, 23 und 33 werden im folgenden als oberer Bildpunkt UT bzw. zentraler Bildpunkt CT bzw. unterer Bildpunkt LT bezeichnet. Zusätzlich enthält die Figur 2 eine Anzahl von Linien, die Gradienten darstellen und die verschiedene einzelne Bildpunkte miteinander verbinden: z.B. die Bildpunkte 13 und 25 in diagonaler Richtung durch eine mit U1 bezeichnete Linie, die Bildpunkte 13 und 21 durch eine mit U2 bezeichnete Linie, die Bildpunkt 12 und 24 durch eine mit U3 bezeichnete Linie und schließlich die Bildpunkte 14 und 22 durch eine mit U4 bezeichnete Linie. In gleicher Weise verbinden die Linien L1 bis L4 diagonal liegende Bildpunkte der zweiten und dritten Zeile. Die vertikal übereinanderliegenden Bildpunkte 13 und 23 werden durch eine mit UV bezeichnete Linie miteinander verbunden und die vertikal übereinanderliegende Bildpunkte 23 und 33 durch eine mit LV bezeichnete Linie. Die horizontal liegenden Bildpunkte 21 und 25 sind über eine mit H1 bezeichnete Linie miteinander verbunden und ebenso die horizontal liegenden Bildpunkte 22 und 24 über eine mit H2 bezeichnete Linie. Es wird darauf hingewiesen, daß die Bezeichnung "H" für horizontal steht, die Bezeichnung "U" für oben, die Bezeichnung "L" für unten und schließlich die Bezeichnung "V" für vertikal. Die verschiedenen Abtastungen und Vergleiche die nach der Erfindung gemacht werden, betreffen den jeweiligen Signalpegel des Bildpunktes. Die Auswertung diagonaler Gradienten erlaubt die gewünschte feine vertikale Auflösung des zu untersuchenden Bildbereiches. Verfälschungen durch Rauschanteile werden dabei weitgehend durch die Flächeneinbeziehung herausgemittelt.

Die mit UV und LV bezeichneten Linien stellen genau genommen keine Gradienten dar, sondern vertikale Berechnungsgrößen für die Gradientenanalyse.

In Fig.3, die ein Ausführungsbeispiel der Gradienten-Meßeinrichtung 20 zeigt, wird ein Farbvideo-Basisbandsignal CVBS einer Einbildpunkt-Verzögerungsschaltung 42 (eine Bildpunkt-Verzögerungseinheit wird mit "D" bezeichnet) zugeführt, deren Ausgang mit einer weiteren Einbildpunkt-Verzögerungsschaltung 44 verbunden ist. Die Verzögerungsschaltung 44 speist ihrerseits eine Zweibildpunkte-Verzögerungsschaltung 46, der eine 906-Bildpunkte-Verzögerungsschaltung 48 folgt. Zur Verzögerung einer ganzen Zeile sind 910-Bildpunkt-Verzögerungseinheiten D erforderlich.

Der Ausgang der 906-Bildpunkte-Verzögerungsschaltung 48 ist mit dem Eingang einer Serienschaltung aus 4 Einbildpunkt-Verzögerungsschaltungen 50, 52, 54 und 56 verbunden, deren Ausgang am Eingang einer 907-Bildpunkte-Verzögerungsschaltung 58 liegt. Deren Ausgang ist mit dem Eingang einer Einbildpunkt-Verzögerungsschaltung 60 verbunden, deren Ausgang eine Zweibildpunkt-Verzögerungsschaltung 62 speist, deren Ausgangssignal mit "11" bezeichnet ist, wobei dieses Ausgangssignal 11 dem Bildpunkt 11 in Fig.2 entspricht. Die Nummern der im Auswertungsfeld 27 von Fig.2 zu irgendeinem Zeitpunkt angegebene Bildpunkte sind in Fig.3 an den zugehörigen Verbindungsknoten der Bildpunkt-Verzögerungsschaltungen angegeben.

Zum Beispiel liegt der Bildpunkt 13 am gemeinsamen Verbindungsknoten der Bildpunkt-Verzögerungsschaltungen 60 und 62 und der Bildpunkt 14 am gemeinsamen Verbindungsknoten der Bildpunkt-Verzögerungsschaltungen 58 und 60 usw.

Von den in Reihe geschalteten Bildpunkt-Verzögerungsschaltungen 42 bis 62 werden 1822 Bildpunkte gespeichert, das sind zwei horizontale Bildzeilen und zwei zusätzliche Bildpunkte. Die 1822 Bildpunkte enthalten damit alle Videosignale des in Fig.2 dargestellten Auswertungsfeldes 27. Die verschiedenen Abtastwerte oder Gradienten zwischen den einzelnen Bildpunkten des Auswertungsfeldes 27 werden aus den gespeicherten Bildpunkten durch eine Kombination von Invertern und Addierern gebildet. Bildpunkt 22 in Fig.3 wird einem Inverter 64 zugeführt (Inverter sind durch "-1" gekennzeichnet), der seinerseits einen Addierer 66 speist. Zugleich wird der Addierer 66 mit dem Bildpunkt 24 gespeist und das Ergebnis einem Absolutwertbildner (= ABS) 68 zugeführt, dessen Ausgang den Gradient H2 abgibt. Aus Fig.2 ist entnehmbar, daß der Gradient H2 aus der Subtraktion der Bildpunkte 24 und 22 gewonnen wird. Bildpunkt 21 wird über einen Inverter 70 einem Addierer 72 zugeführt und dort mit dem Bildpunkt 25 kombiniert. Der Ausgang des Addierers 72 speist einen Absolutwertbildner 74, der den Gradient H1 abgibt. Bildpunkt 25 ist über einen Inverter 82 einem Addierer 76 zugeführt, dessen anderer Eingang mit dem Bildpunkt 13 gespeist ist. Der Ausgang des Addierers 76 ist mit einem Absolutwertbildner 78 verbunden, dessen Ausgang den Gratient U1 abgibt. Der Ausgang des Absolutwertbildners 78 ist zusätzlich mit dem Eingang einer Einbildpunkt-Verzögerungsschaltung 80 verbunden, deren Ausgang den Gradienten U3 abgibt.

Aus Fig.2 ist erkennbar, daß für ein sich von rechts nach links bewegendes Bildpunktfeld, das nacheinander die Bildpunkte 15, 14, 13, usw. erreicht, der Gradient U1 eine Abtastperiode später zum Gradient U3 wird. Daher kann der Gradient U3 einfach aus der Verzögerung des Gradients U1 um eine Abtastperiode (= Einbildpunkt-Verzögerungseinheit D) gebildet werden.

Der Inverter 82 in Fig.3 ist auch mit einem Addierer 84 verbunden, der den Bildpunkt 33 hinzuaddiert, um mittels eines Absolutwertbildners 86 den Gradient L1 zu bilden. Mittels einer Einbildpunkt-Verzögerungsschaltung 88, deren Eingang mit dem Ausgang des Absolutwertbildners 86 verbunden ist, wird der Gradient L3 aus dem Gradient L1 gebildet. Dies erfolgt in gleicher Weise wie beim Gradient U3 aus dem Gradient U1. Der Ausgang des Inverters 64 (= negativer Bildpunkt 22) ist zusätzlich mit einem Addierer 90 und einem Addierer 96 verbunden, der ferner mit dem Bildpunkt 14 bzw. 34 gespeist ist, wobei mittels eines nachfolgenden Absolutwertbildners 92 bzw. 98 der Gradient U4 bzw. L4 erzeugt wird. Beide Gradienten U4, L4 werden jeweils durch eine Einbildpunkt-Verzögerungsschaltung 94 bzw. 100 verzögert, um den Gradient U2 bzw. L2 zu erzeugen. Schließlich wird der Bildpunkt 23 einem Inverter 102 zugeführt, dessen Ausgang mit einem Addierer 104 und einem Addierer 108 verbunden ist, die ferner mit den Bildpunkten 13 bzw. 33 gespeist sind. Der Ausgang des Addierers 104 bzw. 108 ist einem Absolutwertschaltkreis 106 bzw. 110 zugeführt, um den Gradient LV bzw. UV zu bilden.

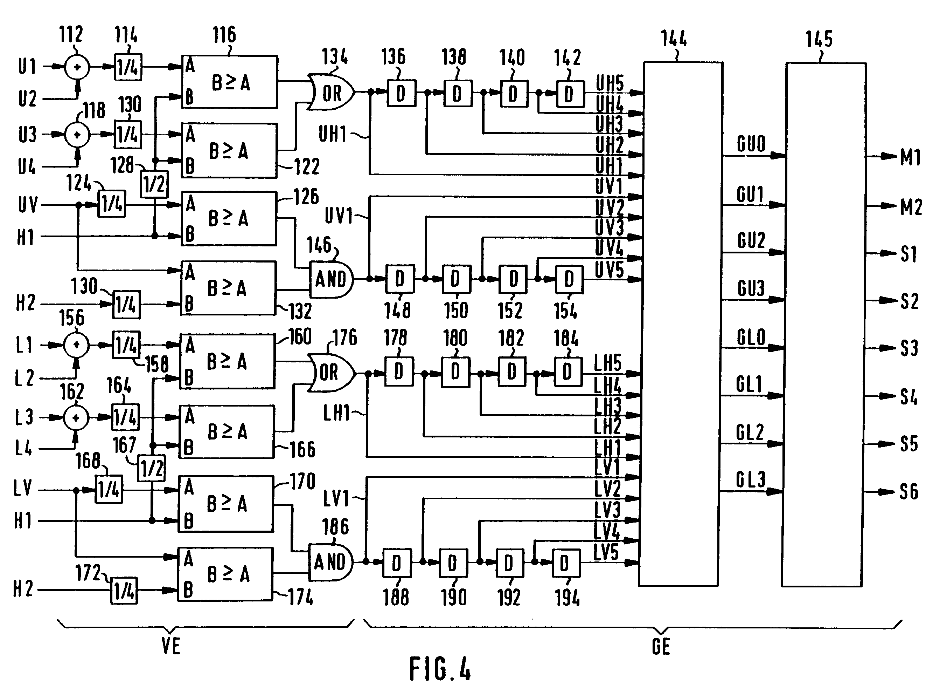

In Fig.4, in der die Gruppen-Entscheidungslogik 30 als Blockschaltbild dargestellt ist, werden die verschiedenen Gradienten über eine Vielzahl von Addierern und Verstärkern den Eingängen einer Vielzahl von Komparatoren zugeführt, der eine weitere logische Signalverarbeitung folgt.

Die Gradienten U1 und U2 werden einem Addierer 112 zugeführt, dessen Ausgang über einen Ein-Viertel-Teiler 114 mit dem Eingang A eines Komparators 116 verbunden ist. Die Gradienten U3 und U4 speisen einen Addierer 118, dessen Ausgang über einen Ein-Viertel-Teiler 120 auf den Eingang A eines Komparators 122 geführt ist. Die B-Eingänge der Komparatoren 116 und 122 sind mit dem Gradient H1 über einen Ein-Halb-Teiler 128 gespeist. Die Komparatoren 116, 122 und die folgenden vergleichen die Signale an den Eingängen A und B und, wenn B größer/gleich A ist, dann liefert der Ausgang eine logische "1". Wie aus den Fig.2 und 4 ersichtlich ist, vergleicht der Komparator 116 ein Viertel der Summe der beiden Gradienten U1 und U2 mit der Hälfte des Gradients H1. Für den Zustand eines gleichförmigen Chroma- und Luma-Signals im Auswertungsfeld 27, sind die Gradienten U1, U2 und H1 ebenfalls gleich. Infolgedessen ist die durch vier geteilte Summe der Gradienten U1 und U2 gleich dem durch zwei geteilten Wert des Gradients H1 und der Komparator 116 erzeugt somit eine logische "1" am Ausgang. Als Ergebnis des Gradientenvergleichs U3, U4 mit H1 erzeugt der Komparator 122 in gleicher Weise eine logische "1".

Der Gradient H1 wird auch dem Eingang B eines Komparators 126 zugeführt, dessen Eingang A mit dem Gradient UV über einen Ein-Viertel-Teiler 124 gespeist ist. Der Gradient UV ist ferner direkt dem Eingang A eines Komparators 132 zugeführt, dessen Eingang B mit dem Gradient H2 über ein Ein-Viertel-Teiler 130 gespeist ist. Wie aus Fig.2 und Fig.4 ersichtlich ist, stellt der Gradient UV die Differenz zwischen den vertikal orientierten Bildpunkten 13 und 23 und der Gradient H2 die Differenz zwischen den horizontal ausgerichteten Bildpunkten 22 und 24 dar. Es wird darauf hingewiesen, daß die Bildpunkte 13, 23, 22 und 24 unterschiedliche Phasenlagen haben. Infolgedessen können diese Bildpunkte unterschiedliche Werte aufweisen, selbst bei einem übergangsfreien, also konstanten Chroma- und Luma-Signal. Dies wird dadurch ausgeglichen, daß ein Viertel des Gradients UV mit dem Gradient H1 im Komparator 126 verglichen wird und ein Viertel des Gradients

EP 0 471 700 B1

H2 mit dem Gradient UV im Komparator 132 und schließlich beide Kriterien gleichzeitig erfüllt sein müssen (UND-Schaltung 146). Durch die Einbeziehung der beiden horizontalen Gradienten H1, H2, durch die Signaländerungen in horizontaler Richtung bestimmt werden, wird eine signalabhängige Vergleichsschwelle für die Gradienten gebildet.

Die Ausgänge der Komparatoren 116 und 122 sind auf eine ODER-Schaltung 134 geschaltet und die Ausgänge der Komparatoren 126 und 132 auf eine UND-Schaltung 146. Die "In-Phase"-Gradientenvergleiche werden somit mittels einer ODER-Schaltung und die "Außer-Phase"-Gradientenvergleiche mittels einer UND-Schaltung verknüpft.

Der Ausgang der ODER-Schaltung 134 ist mit einer Serienschaltung aus vier Verzögerungsschaltungen 136, 138, 140 und 142 verbunden, um neben dem aktuellen Entscheidungssignal UH1 auch noch die vier vorausgehenden Entscheidungssignale UH2 bis UH5 berücksichtigen zu können.

Die aktuelle Einzelentscheidung in Fig.4 und Fig.2 betrifft den Bildpunkt 23 während die noch näher zu beschreibende Gruppenentscheidung den Bildpunkt 21 betrifft. Durch die Gruppenentscheidung wird letztendlich das durchzuführende Verfahren der Luma/Chroma-Trennung bestimmt. Die Gruppenentscheidung in der Logikeinheit 144 stellt gleichsam eine räumliche Filterschaltung für die Einzelentscheidungen dar, die störende Bildwiedergabeeffekte bei der bildpunktweisen Verfahrensumschaltung der Luma/Chroma-Trennung verhindert.

In gleicher Weise wie bei der ODER-Schaltung 134 ist der Ausgang der UND-Schaltung 146 mit einer Serienschaltung von vier Verzögerungsschaltungen 148, 150, 152 und 154 verbunden, um neben dem aktuellen Entscheidungssignal UV1 ebenfalls die vier vorausgehenden Entscheidungssignale zu erzeugen, die mit UV2 bis UV5 bezeichnet sind. Diese Entscheidungssignale werden der Logikeinheit 144 zugeführt, deren Funktionsweise in einer Logik-Tabelle dargestellt ist.

Die untere Hälfte der Schaltungsanordnung nach Fig.4 ist für die unteren Gradienten L... des Auswertungsfeldes 27 bestimmt. Die Gradienten L1 und L2 werden einem Addierer 156 zugeführt und von dessen Ausgang über einen Ein-Viertel-Teiler 158 auf den Eingang A eines Komparators 160. Auf ähnliche Weise werden die Gradienten L3 und L4 einem Addierer 162 zugeführt und von dessen Ausgang über einen Ein-Viertel-Teiler 164 auf den Eingang A eines Komparators 166. Die B-Eingänge dieser Komparatoren sind mit dem Gradient H1 gespeist, der mittels eines Ein-Halb-Teilers 167 halbiert ist. Ein Komparator 170 ist am A-Eingang über einen Ein-Viertel-Teiler 168 mit dem Gradient LV und am B Eingang direkt mit dem Gradient H1 gespeist. Ein Komparator 174 ist schließlich am A-Eingang mit dem Gradient LV direkt und am B-Eingang mit dem Gradient H2 über einen Ein-Viertel-Teiler 172 gespeist. Die Ausgänge der Komparatoren 160 und 166 sind einer ODER-Schaltung 167 zugeführt und die Ausgänge der Komparatoren 170 und 174 einer UND-Schaltung 186.

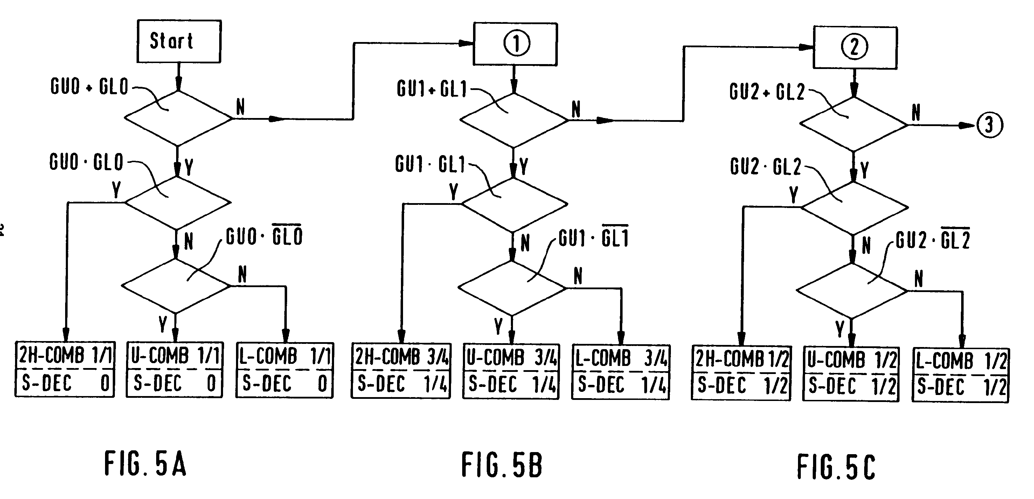

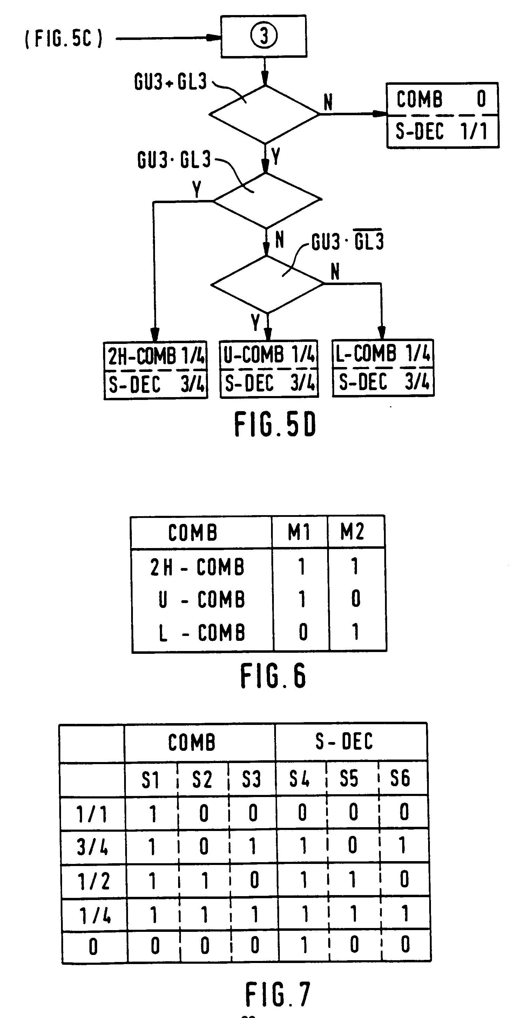

Der Ausgang der ODER-Schaltung 176 speist eine Serienschaltung von vier gleichen Verzögerungsschaltungen (Verzögerungszeit jeweils D) 178, 180, 182 und 184, um außer dem aktuellen Entscheidungssignal LH1 die vier vorausgehenden Entscheidungssignale LH2 bis LH5 zur Verfügung zu haben. In gleicher Weise speist die UND-Schaltung 186 eine Serienschaltung aus vier gleichen Verzögerungsschaltungen 188, 190, 192 und 194, um ebenfalls außer dem aktuellen Entscheidungssignal LV1 die vier vorausgehenden Entscheidungssignale LV2 bis LV5 zur Verfügung zu haben. Alle zwanzig Entscheidungssignale werden der Logikeinheit 144 zugeführt und erzeugen dort acht Zustandssignale GU0 bis GU3 und GL0 bis GL3, die zusammen einer Bewertungseinheit 145 zugeführt sind, deren Funktion durch die Flußdiagramme der Figuren 5a bis 5d dargestellt ist.

Eine weitere Verbesserung der "Außer-Phase"-Gradientenvergleiche ergibt sich, wenn die Komparatoren 126, 132, 170 und 174 neben dem eigentlichen Signalvergleich zusätzlich den Absolutpegel eines ihrer Eingangssignale überwachen und eine logische "1" abgeben, wenn der jeweilige Signalpegel kleiner/gleich einer vorgegebenen Schwelle (= S) ist, z.B.: der Komparator 126 liefert eine logische "1", wenn UV/4 kleiner/gleich 7; der Komparator 132, wenn UV kleiner/gleich 7; der Komparator 170, wenn LV/4 kleiner/gleich 7 und schließlich der Komparator 174, wenn LV kleiner/gleich 7 ist.

Hierbei wird eingeräumt, daß die optimale Auswahl der verschiedenen Gradientenanteile, die für die Ähnlichkeitsanalyse im Auswertungsfeld 27 miteinander zu kombinieren sind, subjektiv ist. Gleiches gilt für die in der Logik-Tabelle dargestellte Logikfunktion und den sich daran anschließenden Funktionsablauf in der Bewertungseinheit 145. Die jeweilige Optimierung wurde aufgrund von Untersuchungsreihen und Computersimulationen entwickelt, wobei eine große Anzahl unterschiedlicher Videosignale zur Verfügung stand. Das beschriebene Verfahren und die zugehörige Schaltungsanordnung stellt eine bevorzugte Ausführung der Erfindung für NTSC-Fernsehsignale dar. Dies soll jedoch nicht als Begrenzung für den breiteren Erfindungsgedanken angesehen werden, der eine Bildwiedergabeverbesserung auch bei hochauflösenden Fernsehsystemen ermöglicht.

Im Zusammenhang mit der Beschreibung der Flußdiagramme nach den Fig.5A bis 5D wird gezeigt, daß aufgrund der acht Zustandssignale für den Bildpunkt 21 die Gruppen-Entscheidung gefällt wird, welche Käm-

6

mungsart (2H-, U- oder L-COMB) durchzuführen ist und welche prozentualen Anteile des getrennten Luma- und Chroma-Signals aus der Kammfilterung und welche aus der Einfachdekodierung (S-DEC) stammen.

Die acht Zustandssignale am Ausgang der Logikeinheit 144 werden entsprechend der folgenden Logik-Tabelle aus den zwanzig Einzelentscheidungssignalen gebildet. Es gilt dabei die Bool'sche Algebra, wobei eine ODER-Verknüpfung durch "+" und eine UND-Verknüpfung durch "·" dargestellt wird.

## Logik-Tabelle

$$GU0 = (UH3) + (UV2 \cdot UV3 \cdot UV4)$$

$$GU1 = ((UH5 \cdot UH4 \cdot UH2 \cdot UH1)) + ((UV1 \cdot UV2 \cdot UV3) + (UV3 \cdot UV4 \cdot UV5))$$

$$GU2 = (UH4 \cdot UH2) + (UV1 \cdot UV2 \cdot UV4 \cdot UV5)$$

$$GU3 = ((UH5 \cdot UH4) + (UH2 \cdot UH1)) + ((UV1 \cdot UV2) + (UV4 \cdot UV5))$$

$$GL0 = (LH3) + (LV2 \cdot LV3 \cdot LV4)$$

$$GL1 = ((LH5 \cdot LH4 \cdot LH2 \cdot LH1)) + ((LV1 \cdot LV2 \cdot LV3) + (LV3 \cdot LV4 \cdot LV5))$$

$$GL2 = (LH4 \cdot LH2) + (LV1 \cdot LV2 \cdot LV4 \cdot LV5)$$

$$GL3 = ((LH5 \cdot LH4) + (LH2 \cdot LH1)) + ((LV1 \cdot LV2) + (LV4 \cdot LV5))$$

Das in Fig.4 in Verbindung mit der Logik-Tabelle dargestellte Verarbeitungskonzept bildet im Bereich VE eine Vorentscheidung für die Luma/Chroma-Trennung, die auch als Einzel- oder als "Grobentscheidung" bezeichnet wird. Sie erfolgt allein aufgrund der Analyse des aktuellen Bildpunktumfeldes. Diese Grobentscheidung wird hauptsächlich durch die Analyse der In-Phase-Gradienten getragen. Damit auch in weniger eindeutigen Fällen gekämmt wird, tragen in geringerem Maße auch die Außer-Phase-Gradienten zur Entscheidung mit bei. Diese unterschiedliche Aussagegewichtung zur Bildung der Entscheidungssignale wird auch durch die Verwendung der ODER- und UND-Schaltungen 134, 176; 146, 186 berücksichtigt.

Die nachfolgende Gruppenentscheidung im Bereich GE ist subjektiver, weil die subjektive Wirkung von zwei vorausgehenden und zwei nachfolgenden Einzelentscheidungen für die optimale Luma/Chroma-Trennung des Bildpunktes 21 mit zu beachten sind. Eine einzige Einfachdekodierung bei sonstiger 100-prozentiger Kammfilterung wird z.B. in eine Kammfilterung (eventuell mit geringerem Anteil) umgewandelt.

Der jeweilige Realisierungsgrad, die Größe des Auswertungsfeldes und die Herleitung der logischen Verknüpfung kann jedoch verändert werden, um andere Ausführungsbeispiele und andere Luma/Chroma-Trennungsverfahren zu realisieren.

Die Zustandssignale am Ausgang der Logikeinheit 144 zeigen den örtlichen und zeitlichen "Ähnlichkeitszustand" der Videosignale im Bereich des zu kämmenden Bildpunktes 21. an. In Abhängigkeit vom Logikpegel dieser Zustandssignale erzeugt die Bewertungseinheit 145 für den Bildpunkt 21 die bereits genannten Verarbeitungsentscheidungen: 2H-, U-, L-COMB, S-DEC, sowie das Verhältnis zwischen Kämmung und einfacher Dekodierung. Die Verfahrensweise dieser Entscheidung wird aus den Flußdiagrammen der Figuren 5A bis 5D ersichtlich.

In Fig.5A prüft die Eingangslogik, ob entweder GU0 oder GL0 eine logische "1" ist. Wenn die Antwort ja (Ja-Entscheidung = Y) ist, ist zu prüfen, ob GU0 und GL0 den logischen Wert "1" haben. Wenn die Antwort ja ist, dann fällt die Entscheidung, daß eine vollständige Zweizeilen-Kammfilterung durchzuführen ist, ohne jeden Anteil an Einfachdekodierung. Wenn GU0 und GL0 nicht "1" sind (Nein-Entscheidung = N), wird geprüft, ob GU0 gleich "1" und GL0 ungleich "1" ist. Wenn dies zutrifft (= Y), dann fällt die Entscheidung, daß eine obere Kammfilterung ohne jeden Einfachdekodierungsanteil stattzufinden hat. Wenn das nicht zutrifft (= N), dann fällt die Entscheidung eine untere Kammfilterung ohne jeden Einfachdekodierungsanteil durchzuführen. Es besteht hierbei eine absteigende Rangfolge unter den von 0 bis 3 durchnummerierten Zustandssignalen der beiden Gruppen, wobei 0 den höchsten Rang einnimmt. Dem tragen auch die Flußdiagramme Fig.5A bis 5D Rechnung, indem die rangniederen Zustandssignale erst dann zur Entscheidung beitragen, wenn die ranghöheren keine eindeutige Entscheidung ermöglichen.

Wenn weder GU0 noch GL0 gleich "1" ist, dann tritt die Fortsetzung des Flußdiagramms in Fig.5B in Erscheinung, wobei zunächst geprüft wird, ob entweder GU1 oder GL1 gleich 1 sind. Wenn ja, dann wird geprüft, ob GU1 und GL1 gleich "1" sind. Wenn ja, dann wird die Entscheidung getroffen 3/4 (= 75%) Zweizeilen-Kammfilterung und ein 1/4 (= 25%) Einfachdekodierung. Das verarbeitete Signal hat dann 75% Zweizeilenkammfilteranteil und 25% Einfachdekodierungsanteil.

Entsprechend den weiteren Flußdiagrammen können die Prozeßentscheidungen bezüglich der Kammfilterung und der Einfachdekodierung verschiedene anteilige Beträge aufweisen. Stets wird jedoch eine 25% Kammfilterung mit einer 75% Einfachdekodierung, eine 50% Kammfilterung mit einer 50% Einfachdekodierung und eine 25% Kammfilterung mit einer 75% Einfachdekodierung kombiniert. Wenn, wie in Fig.5D dargestellt ist, alle Zustandssignale gleich "0" sind, ist der Kämmungsanteil 0%. In diesem Fall muß überhaupt keine Kämmung durchgeführt werden, statt dessen findet eine hundertprozentige Einfachdekodierung statt.

In den Figuren 6 und 7 werden die ersten bzw. zweiten Steuersignale M1, M2 bzw. S1 bis S6 in Tabellenform als Binärsignale dargestellt, wobei in der ersten Spalte die jeweils durchzuführende Kammfilterungsart bzw. der zugehörige Verhältniswert angegeben wird. Für die Zweizeilen-Kammfilterung weisen die beiden ersten Steuersignale M1 und M2 den logischen Pegel 1 auf. Für die obere Kammfilterung liegt das Steuersignal M1 auf dem logischen Pegel 1 und das Steuersignal M2 auf dem logischen Pegel "0". Für die untere Kammfilterung schließlich ist das Steuersignal M1 gleich "0" und das Steuersignal M2 gleich "1".

In Fig.7 ist die Zuordnung der zweiten Steuersignale S1, S2 und S3 zum zugehörigen Verhältnisanteil der Kammfilterung und die Zuordnung der restlichen zweiten Steuersignale S4, S5 und S6 zum zugehörigen Anteil der Einfachdekodierung angegeben. Die volle Kammfilterung entspricht S1=1, S2=0 und S3=0. Die volle Einfachdekodierung S4=1, S5=0 und S6=0. Wie bereits ausgeführt wurde, gibt es bei der vollen Kammfilterung keinen Einfachdekodierungsanteil - andererseits gehören beispielsweise zu 25% Kammfilterung 75% Einfachdekodierung. Die Kombination von Kammfilterung und Einfachdekodierung ändert daher die Größe des Videosignals nicht.

Die Verhältnisanteile beim Luma- oder Chroma-Ausgangssignal sind im Zusammenhang mit der Qualität des gesamten Bildes zu beurteilen. Die "grobe Entscheidung" die darauf keine Rücksicht nimmt, und die "feine Entscheidung" die sich aus der Gruppenbetrachtung ergibt, sind nach der Erfindung auf alle Arten von Videosignale anwendbar.

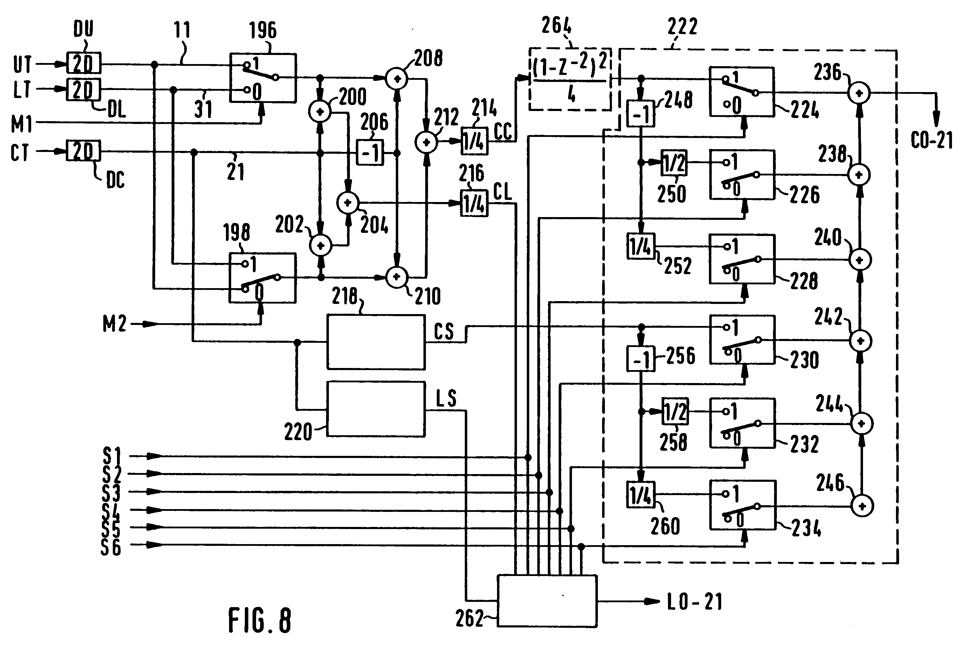

Die Schaltung, in der die eigentliche Luma/Chroma-Trennung und die anteilige Mischung der Signale für den Bildpunkt 21 stattfindet, ist in Fig.8 dargestellt. Die Eingänge, die mit UT, LT und CT gekennzeichnet sind, entsprechen im aktuellen Auswertungsfeld von Fig.2 dem oberen Bildpunkt UT bzw. dem unteren Bildpunkt LT bzw. dem zentralen Bildpunkt CT. Durch die jeweilige Verzögerung mittels der Zweipunkte-Verzögerungsschaltungen DU, DL, DC werden daraus die Signale der aktuellen Bildpunkte 11 bzw. 21 bzw. 31 gebildet. Die Eingänge mit den Bezeichnungen M1, M2 und S1 bis S6 entsprechen den in Fig.6 und 7 angegebenen Steuersignalen M1, M2 und S1 bis S6, die aufgrund der Funktionsdiagramm-Entscheidung nach den Fig.5A bis 5D gebildet werden. Zwei elektronische Umschalter 196 und 198 werden durch das Steuersignal M1 bzw. M2 gesteuert und schalten den Signalweg für den oberen und unteren Bildpunkt UT, LT zu verschiedenen Addierern. Der Ausgang des Schalters 196 liegt am Eingang eines Addierers 200 und auch am Eingang eines Addierers 208. Der Ausgang des Schalters 198 liegt am Eingang eines Addierers 202 und auch am Eingang eines Addierers 210. Der zentrale Bildpunkt CT ist jeweils mit dem anderen Eingang des Addierers 200 und 202 verbunden und über einen Inverter 206 mit dem jeweiligen anderen Eingang des Addierers 208 und 210. Die Addierer 200 und 202 speisen ausgangsseitig einen Addierer 204 und die Addierer 208 und 210 ihrerseits einen Addierer 212. Mit 1 und "0" sind die jeweiligen Schaltereingänge bezeichnet, die zugleich dem logischen Zustand des zugeführten Steuersignals "1" bzw."0" entsprechen.

Über den Schalter 196 wird in der Schaltposition 1 der verzögerte obere Bildpunkt UT dem Addierer 200 zugeführt und zum verzögerten zentralen Bildpunkt CT hinzuaddiert, um auf diese Weise die zwei Bildpunkte der beiden oberen Zeilen miteinander zu kämmen. In gleicher Weise wird über den Schalter 198 in seiner 0-Position der verzögerte obere Bildpunkt UT dem Addierer 202 zugeführt, der dessen Wert zum Wert des verzögerten zentralen Bildpunktes CT hinzuaddiert. Somit kämmt der Addierer 200 die aktuellen Bildpunkte 11 und 21 und erzeugt damit ein 2L-Signal (doppelter Luma-Signalwert) ohne Chroma-Anteil. Der Addierer 202 addiert in gleicher Weise die aktuellen Bildpunkte 11 und 21 und bildet daraus ebenfalls ein 2L-Signal (doppeltes Luma-Signal). Die beiden doppelten Luma-Signale 2L werden im Addierer 204 addiert, dessen Ausgang somit den vierfachen Luma-Signalwert 4L aufweist. Mittels des Ein-Viertel-Teilers 216 wird dessen Wert geviertelt - dies ist das gekämmte Luma-Signal CL für den Bildpunkt 21.

Der Bildpunkt 11 ist aber zugleich auch dem Addierer 208 zusammen mit dem invertierten Bildpunkt 21 zugeführt. Der Addierer 208 subtrahiert daher den Wert des Bildpunktes 21 vom Wert des Bildpunktes 11 und erzeugt somit ein doppeltes Chroma-Signal 2C ohne Luma-Signalanteil. In gleicher Weise führt der Schalter 198 in der 0-Schaltposition den Bildpunkt 11 dem einen Eingang des Addierers 210 zu, dessen anderem Eingang der invertierte Bildpunkt 21 zur Subtraktion zugeführt ist. Auch diese Subtraktion liefert als Ergebnis das doppelte Chroma-Signal 2C. Die beiden doppelten Chroma-Signale 2C werden im Addierer 212 addiert und in einem Ein-Viertel-Teiler 214 geviertelt, um das gekämmte Chroma-Signal CC zu bilden. Diese Signalumsetzung ist somit eine Zweizeilen-Kammfilterung für den Bildpunkt 21.

Ein Signalmischer 222 für das Chroma-Signal, der in Fig.8 durch eine gestrichelte Linie umrandet ist, enthält sechs weitere elektronische Umschalter 224, 226, 228, 230, 232 und 234, die durch die Steuersignale S1 bis S6 gesteuert werden. Ein identischer Signalmischer für das Luma-Signal zeigt der vereinfachte Schaltungsblock 262. An seinem Ausgang ist das Luma-Ausgangssignal L0-21 abgreifbar.

Im Signalmischer 222 für das Chroma-Signal ist das gekämmte Chroma-Signal CC dem Eingang 1 des Schalters 224 und einem Inverter 248 zugeführt. Der Ausgang des Inverters 248 speist einen Halb-Teiler 250, dessen Ausgang mit dem Eingang 1 des Schalters 226 verbunden ist. Ferner ist das Ausgangssignal des Inverters 248 mittels eines Ein-Viertel-Teilers 252 geviertelt, dessen Ausgang mit dem Eingang 1 des Schalters 228 verbunden ist. Mittels der Schalter 224, 226 und 228 wird bestimmt, welcher Verhältnisanteil des gekämmten Chroma-Signals CC im Chroma-Ausgangssignal CO-21 enthalten ist.

Der verzögerte zentrale Bildpunkt CT wird ferner einem Chroma-Bandpaß 218 und einer Chroma-Farbträgerfalle 220 zugeführt. Der Ausgang der Chroma-Farbträgerfalle 220, die das Einfach-Luma-Signal LS liefert, speist einen Signalmischer 262 für das Luma-Signal. Der Ausgang des Chroma-Bandpasses 218, der das Einfach-Chroma-Signal CS liefert, speist den Eingang 1 des Schalters 230 und ferner einen Inverter 256. Dieser erzeugt ein negatives (invertiertes) Chroma-Signal, das einem Ein-Halb-Teiler 258 zugeführt ist, dessen Ausgang den Eingang 1 des Schalters 232 und ferner einen Ein-Viertel-Teiler 260 speist, dessen Ausgang mit dem Eingang 1 des Schalters 234 verbunden ist.

Wie bereits angegeben wurde, werden die Schaltpositionen der einzelnen Schalter im Chroma-Signalmischer 222 durch die zweiten Steuersignale S1 bis S6 gesteuert. Die Ausgänge der Schalter sind mit sechs hintereinandergeschalteten Addierern 246, 244, 242, 240, 238 und 236 gekoppelt. Die Zuordnungsreihenfolge der Schalterausgänge ist 234, 232, 230, 228, 226 und 224, wobei der Ausgang des Schalters 234 mit dem Eingang des Addierers 246 und schließlich der Ausgang des Schalters 224 mit dem freien Eingang des letzten Addierers 236 verbunden ist, dessen Ausgang das gemischte Chroma-Ausgangssignal liefert. Die jeweiligen Signalanteile werden dabei durch Kombination der einzelnen Schalterpositionen im Chroma-Signalmischer 222 bestimmt.

Aus Fig. 6 und Fig. 7 ist erkennbar, daß die Art der Kämmung durch die beiden ersten Steuersignale M1 und M2 bestimmt wird und das jeweilige Mischungsverhältnis von Kämmung und Einfachdekodierung durch die sechs zweiten Steuersignale S1 bis S6. Wird z.B. angenommen, daß die Steuersignale S1=1, S2=0 und S3=0 sind (das entspricht einer vollen Kammfilterung ohne Einfach-Dekodierungsanteil), dann ist das gekämmte Chroma-Signal CC mit seinem vollem Wert am Ausgang des Addierers 236 abgreifbar, denn die Schalter 226 und 228 befinden sich in ihrer jeweiligen 0-Position, vgl. Fig.8. Das Einfach-Chroma-Signal CS wird nicht über die Schalter 230, 232 und 234 weitergeschaltet, weil sich diese jeweils in der 0-Position befinden, vgl. Fig.8. Dies ergibt sich aus den Steuersignalen S4, S5 und S6, die jeweils den logischen 0-Zustand aufweisen. Der Addierer 236 ist somit nur über den Schalter 224 mit dem kammgefilterten Chroma-Signal CC gespeist, das mit 100% das Chroma-Ausgangssignal bildet.

Soll das Chroma-Ausgangssignal beispielsweise aus einem 3/4 Anteil Kammfilterung und einem 1/4 Anteil Einfachdekodierung bestehen, dann weisen die Steuersignale folgende Logikpegel auf: das Steuersignal S2=0 und alle anderen Steuersignale S1 = S3 = S4 = S5 = S6 = 1. Mit dieser Steuerkombination wird das kammgefilterte Chroma-Signal CC (100 %) dem Addierer 236 über den Schalter 224 zugeführt und ein Viertel davon mittels des in Position 1 liegenden Schalters 228 wieder abgezogen. Als Ergebnis sieht der Addierer 236 lediglich drei Viertel des kammgefilterten Chroma-Signals CC. Das Einfach-Chroma-Signal CS wird vollständig durch den Schalter 230 weitergeschaltet. Von diesem Wert wird mittels des Schalters 232 der halbe Wert und mittels des Schalters 234 ein viertel Wert abgezogen. Daraus resultiert schließlich, daß der Addierer 236 vom Einfach-Chroma-Signal CS nur noch ein Viertel sieht.

Die anderen Mischungsverhältnisse ergeben sich aus den anderen Kombinationen der Steuersignale S1 bis S6 im Zusammenhang mit der jeweiligen Kämmung, die durch die beiden ersten Steuersignale M1 und M2 festgelegt wird. Wegen der identischen Funktionsweise der Luma-Signalmischungseinrichtung (= Schaltungsblock 262) wird auf dessen ausführliche Beschreibung und Darstellung verzichtet.

In Fig.8 ist mittels eines gestrichelt dargestellten Bandpasses 264 eine weitere Verbesserung angegeben. Das gekämmte Chroma-Signal CC wird dabei mittels eines Farbbereich-Durchlaßfilters, z.B. mit dem in digitaler Form angegebenen Frequenzgang $0,25\ (1-Z^{-2})^2$, von Luma-Resten befreit, die z.B. durch Kämmung eines verrauschten Videosignals entstehen.

**Patentansprüche**

1. Verfahren zur Zweizeilenkammfilterung der Luma- und Chroma-Komponenten (Luma = Helligkeit, Chroma = Farbe) in einem abgetasteten Fernsehsignalgemisch, das insbesondere dem NTSC-Farbfernsehstandard entspricht und mit der vierfachen Farbhilfsträgerfrequenz abgetastet und digitalisiert ist, bei dem
   - innerhalb eines Auswertungsfeldes eine Anzahl von vertikalen, horizontalen und diagonalen Gradienten festgelegt wird, wobei das Auswertungsfeld in vertikaler Richtung Bildpunkte von drei übereinanderliegenden Zeilen erfaßt, und
   - mittels einer Gradientenanalyse eine Entscheidung gebildet wird, ob eine Zweizeilenkammfilterung (= 2H-COMB), eine obere Kammfilterung (= U-COMB), eine untere Kammfilterung (= L-COMB) oder eine Einfachdecodierung (= S-DEC) durchgeführt werden soll,
   gekennzeichnet durch folgende Merkmale:
   - das Auswertungsfeld (27) umfaßt von einem zentralen Bildpunkt (CT) aus gerechnet in horizontaler Richtung in der oberen und in der unteren Zeile je mindestens drei Bildpunkte und in der mittleren Zeile mindestens fünf Bildpunkte,
   - alle Bildpunkte, die den zentralen Bildpunkt (CT) unmittelbar umgeben, sind mindestens durch jeweils einen der Gradienten erfaßt,
   - die diagonalen Gradienten werden zwischen Bildpunkten gleicher Phasenlage gebildet,
   - die Entscheidung, welches Kämmungsverfahren für den jeweils zu kämmenden Bildpunkt anzuwenden ist, wird durch eine Einzelentscheidung (VE) und eine Gruppenentscheidung (GE) getroffen,
   - die jeweilige Einzelentscheidung (VE) erfolgt über die Auswertung von vorbestimmten Ähnlichkeitskriterien der ungefilterten Bildpunkte des Auswertungsfeldes (27) für einen momentanen Bildinhalt und
   - die eigentliche Verarbeitungsentscheidung, welches Kämmungsverfahren für den zu kämmenden Bildpunkt anzuwenden ist, wird über die Gruppenentscheidung (GE) gebildet, die eine Auswertung aufeinanderfolgender Einzelentscheidungen (VE) für aufeinanderfolgende Bildinhalte darstellt.

2. Verfahren nach Anspruch 1, dadurch gekennzeichnet, daß die Luma- und Chroma-Ausgangssignale (L0-21, CO-21) aus Signalanteilen des jeweiligen Kämmungsverfahrens und der Einfachdekodierung zusammengesetzt sind, wobei das jeweilige Mischungsverhältnis durch die Gruppenentscheidung (GE) mitbestimmt wird.

3. Verfahren nach Anspruch 1, gekennzeichnet durch folgende Merkmale:
   - das Auswertungsfeld (27) enthält nebeneinanderliegend in der oberen Zeile drei Bildpunkte (12, 13, 14), in der mittleren Zeile fünf Bildpunkte (21, 22, 23, 24, 25) und in der unteren Zeile drei Bildpunkte (32, 33, 34), wobei die mittleren Bildpunkte (13, 23, 33) (= oberer, = zentraler, = unterer Bildpunkt (UT, CT, LT)) aller drei Zeilen vertikal ausgerichtet sind und
   - aus den ungefilterten Videosignalwerten der einzelnen Bildpunkte werden folgende Gradienten als Absolutwertgrößen gebildet:
   Gradient U1 aus den Bildpunkten 13 und 25,
   Gradient U2 aus den Bildpunkten 13 und 21,
   Gradient U3 aus den Bildpunkten 12 und 24,
   Gradient U4 aus den Bildpunkten 14 und 22,
   Gradient L1 aus den Bildpunkten 25 und 33,
   Gradient L2 aus den Bildpunkten 21 und 33,
   Gradient L3 aus den Bildpunkten 24 und 32,
   Gradient L4 aus den Bildpunkten 22 und 34,
   Gradient UV aus den Bildpunkten 13 und 23,
   Gradient LV aus den Bildpunkten 23 und 33,
   Gradient H1 aus den Bildpunkten 21 und 25 und
   Gradient H2 aus den Bildpunkten 22 und 24.

4. Verfahren nach Anspruch 3, dadurch gekennzeichnet, daß bei der Einzelentscheidung aus den Gradienten folgende vier zeitgleiche Einzelentscheidungssignale gebildet werden:

UH1 = ((H1)/2 größer/gleich (U1 + U2)/4) + ((H1)/2 größer/gleich (U3 + U4)/4),
UV1 = (H1 größer/gleich UV/4)· ((H2)/4 größer/gleich UV),
LH1 = ((H1)/2 größer/gleich (L1 + L2)/4) + ((H1)/2 größer/gleich (L3 + L4)/4) und
LV1 = (H1 größer/gleich LV/4). ((H2)/4 größer/gleich LV), wobei "+" eine ODER-Verknüpfung und "·" eine UND-Verknüpfung darstellt.

5. Verfahren nach Anspruch 4, dadurch gekennzeichnet,
- daß aus fünf aufeinanderfolgenden Einzelentscheidungssignalen, die jeweils aus den vier zeitgleichen Einzelentscheidungssignalen (UHi, UVi, LHi, LVi) bestehen, für die Gruppenentscheidung (GE) folgende acht Zustandssignale gebildet werden, die einen örtlichen und zeitlichen Ähnlichkeitszustand des Videosignals im Bereich des zu kämmenden Bildpunktes (21) definieren:

$$GU0 = (UH3) + (UV2·UV3·UV4)$$
$$GU1 = ((UH5·UH4·UH2·UH1)) + ((UV1·UV2·UV3) + (UV3·UV4·UV5))$$
$$GU2 = (UH4·UH2) + (UV1·UV2·UV4·UV5)$$
$$GU3 = ((UH5·UH4) + (UH2·UH1)) + ((UV1·UV2) + (UV4·UV5))$$
$$GL0 = (LH3) + (LV2·LV3·LV4)$$
$$GL1 = ((LH5·LH4·LH2·LH1)) + ((LV1·LV2·LV3) + (LV3·LV4·LV5))$$
$$GL2 = (LH4·LH2) + (LV1·LV2·LV4·LV5)$$
$$GL3 = ((LH5·LH4) + (LH2·LH1)) + ((LV1·LV2) + (LV4·LV5))$$

und
daß über eine logische Bewertung dieser acht Zustandssignale die jeweilige Verarbeitungsentscheidung 2H-, U-, L-COMB oder S-DEC und ein jeweiliger Mischungsanteil aus Kammfilterung und Einfachdekodierung der Luma- und Chroma-Ausgangssignale (LO-21, CO-21) bestimmt wird.

6. Verfahren nach Anspruch 5, dadurch gekennzeichnet, daß die jeweilige Verarbeitungsentscheidung durch eine der folgenden logischen Verknüpfungen der acht Zustandssignale definiert wird:
2H-COMB mit 100% und S-DEC mit 0%: $(GU0· \overline{GL0})$,
U-COMB mit 100% und S-DEC mit 0%: $(\overline{GU0}· \overline{GL0})$,
L-COMB mit 100% und S-DEC mit 0%: $(\overline{GU0}· GL0)$,
2-H-COMB mit 75% und S-DEC mit 25%: $(\overline{GU0}· \overline{GL0})· (GU1· \overline{GL1})$,
U-COMB mit 75% und S-DEC mit 25%: $(\overline{GU0}· \overline{GL0})· (\overline{GU1}· \overline{GL1})$,
L-COMB mit 75% und S-DEC mit 25%: $(\overline{GU0}· \overline{GL0})· (\overline{GU1}· GL1)$,
2H-COMB mit 50% und S-DEC mit 50%:
$(\overline{GU0}· \overline{GL0})· (\overline{GU1}· \overline{GL1})· GU2· \overline{GL2})$,
U-COMB mit 50% und S-DEC mit 50%:
$(\overline{GU0}· \overline{GL0})· (\overline{GU1}· \overline{GL1})· (\overline{GU2}· \overline{GL2})$,
L-COMB mit 50% und S-DEC mit 50%:
$(\overline{GU0}· \overline{GL0})· (\overline{GU1} · \overline{GL1})· (\overline{GU2}· GL2)$,
2H-COMB mit 25% und S-DEC mit 75%:
$(\overline{GU0}· \overline{GL0})· (\overline{GU1}· \overline{GL1})· (\overline{GU2}· \overline{GL2})· (GU3· GL3)$,
U-COMB mit 25% und S-DEC mit 75%:
$(\overline{GU0}· \overline{GL0})· (\overline{GU1}· \overline{GL1})· (\overline{GU2}· \overline{GL2})· (GU3· \overline{GL3})$,
L-COMB mit 25% und S-DEC mit 75%:
$(\overline{GU0}· \overline{GL0})· (\overline{GU1}· \overline{GL1})· (\overline{GU2}· \overline{GL2})· (\overline{GU3}· GL3)$ und
COMB mit 0% und S-DEC mit 100%:
$(\overline{GU0}· \overline{GL0})· (\overline{GU1}· \overline{GL1})· (\overline{GU2}· \overline{GL2})· (\overline{GU3}· \overline{GL3})$.

7. Verfahren nach Anspruch 4, dadurch gekennzeichnet, daß die Einzelentscheidungssignale UV1 und LV1 sowohl von den horizontal orientierten Gradienten H1, H2 als auch von einem absoluten Schwellenwert (= S) abhängig sind:
UV1 = ((H1 größer/gleich UV/4) + (UV/4 kleiner/gleich S)· (((H2)/4 größer/gleich UV) + (UV kleiner/gleich S)) und
LV1 = ((H1) größer/gleich LV/4) + (LV/4 kleiner/gleich S)· (((H2)/4 größer/gleich LV) + (LV kleiner/gleich S)),
wobei "+" eine ODER- und "·" eine UND-Verknüpfung darstellt.

8. Verfahren nach Anspruch 6, dadurch gekennzeichnet, daß das kammgefilterte Chroma-Signal (CC) vor der Mischung mit dem Einfach-Chroma-Signal (CS) bandpaßgefiltert ist, wobei die Durchlaßkurve bis auf einen Maßstabsfaktor durch (1 - z⁻²)² definiert ist und die Abtastfrequenz dem Vierfachen der Farbhilfsträgerfrequenz entspricht.

9. Schaltungsanordnung zur Durchführung des Verfahrens nach mindestens einem der Ansprüche 1 bis 8, gekennzeichnet durch das Vorhandensein folgender Teilschaltungen:
- eine Gradienten-Meßeinrichtung (20), die Speichereinrichtungen und arithmetische Verknüpfungseinrichtungen zur Erzeugung der Gradienten des Auswertungsfeldes (27) enthält,
- eine Gruppen-Entscheidungslogik (30), die folgende weitere Teilschaltungen enthält:
-- eine Einzelentscheidungslogik (VE) zur Erzeugung der zeitgleichen Einzelentscheidungssignale (UH1, UV1, LH1, LV1),
-- Speichereinrichtungen, um gleichzeitig mindestens fünf aufeinanderfolgende Einzelentscheidungssignale abzugreifen, wobei jedes Einzelentscheidungssignal die vier zeitgleichen Einzelentscheidungssignale (UHi, UVi, LHi, LVi) enthält,
-- eine Logikeinheit (144) zur Bildung von mindestens acht Zustandssignalen (GU0 bis GU3 und GL0 bis GL3) aus den zugeführten Einzelentscheidungssignalen und
-- eine Bewertungseinheit (145), in der über logische Verknüpfungen der zugeführten Zustandssignale die Entscheidung über die jeweilige Kämmungsart (2H-, U-, L-COMB) und das zugehörige Mischungsverhältnis aus Kämmung und Einfachdekodierung gefällt wird, und
- eine Luma-Chroma-Trenneinrichtung (40), die Einrichtungen für die verschiedenen Kämmungsarten, Einrichtungen (218, 220) zur Einfachdekodierung des Luma-Chroma-Signalgemisches, einen Chroma- und einen Luma-Signalmischer (222, 262) enthält, wobei die unterschiedlichen Kämmungsarten und Mischungsverhältnisse durch elektronische Umschalter von Ausgangssignalen (M1, M2, S1 bis S6) der Bewertungseinheit (145) gesteuert sind.

## Claims

1. Method of two-line comb filtering the luma and chroma components in a sampled composite television signal which corresponds to the NTSC color-television standard in particular and is sampled and digitized at four times the color subcarrier frequency, wherein
- within a display area, a number of vertical, horizontal, and diagonal gradients are determined, the display area embracing pixels of three lines lying one above the other, and
- based upon a gradient analysis, a decision is made as to whether to two-line comb (= 2H-COMB), comb up (= U-COMB), comb down (= L-COMB) or simple decode (= S-DEC),
characterized by the following features:
- The display area (27), as seen from a center pixel (CT), embraces in the horizontal direction at least three pixels in the upper line and in the lower line and at least five pixels in the middle line;
- each of the pixels directly surrounding the center pixel (CT) is determined by at least one of the gradients;
- the diagonal gradients are formed between in-phase pixels;
- the decision as to the type of combing to be performed for the respective pixel to be combed is made by a single decision (VE) and a group decision (GE);
- the respective single decision (VE) is made based upon the evaluation of predetermined similarity criteria of the unfiltered pixels of the display area (27) for an instantaneous picture content, and
- the actual processing decision as to the type of combing to be performed for the pixel to be combed is made based upon the group decision (GE), which represents an evaluation of successive single decisions (VE) for successive picture contents.

2. A method as claimed in claim 1, characterized in that the luma and chroma output signals (LO-21, CO-21) are composed of signal components of the respective type of combing and the single decoding, the respective proportion of combing and simple decoding being also determined by the group decision (GE).

3. A method as claimed in claim 1, characterized by the following features:
- The display area (27) contains three pixels (12, 13, 14) lying side by side in the upper line, five pixels (21, 22, 23, 24, 25) lying side by side in the middle line, and three pixels (32, 33, 34) lying side by side in the lower line, with the central pixels (13, 23, 33) (= upper, = center, =lower pixel (UT, CT, LT)) of all three lines being vertically aligned, and
- from the unfiltered video signal values of the individual pixels, the following gradients are formed as

12

absolute values:
gradient U1 from pixels 13 and 25,
gradient U2 from pixels 13 and 21,
gradient U3 from pixels 12 and 24,
gradient U4 from pixels 14 and 22,
gradient L1 from pixels 25 and 33,
gradient L2 from pixels 21 and 33,
gradient L3 from pixels 24 and 32,
gradient L4 from pixels 22 and 34,
gradient UV from pixels 13 and 23,
gradient LV from pixels 23 and 33,
gradient H1 from pixels 21 and 25, and
gradient H2 from pixels 22 and 24.

4. A method as claimed in claim 3, characterized in that during the single decision, the following four concurrent single-decision signals are developed from the gradients:
UH1 = ((H1)/2 greater than or equal to (U1 + U2)/4) + ((H1)/2 greater than or equal to (U3 + U4)/4),
UV1 = (H1 greater than or equal to UV/4) · ((H2)/4 greater than or equal to UV),
LH1 = ((H1/2 greater than or equal to (L1 + L2))/4) + ((H1)/2 greater than or equal to (L3 + L4)/4), and
LV1 = (H1 greater than or equal to LV/4) · ((H2)/4 greater than or equal to LV),
where "+" indicates an OR operation and "·" indicates an AND operation.

5. A method as claimed in claim 4, characterized in
- that for the group decision (GE), the following eight status signals, which define a local and temporal similarity status of the video signal in the area of the pixel (21) to be combed, are formed from five successive single-decision signals each consisting of the four concurrent single-decision signals (UHi, UVi, LHi, LVi):

$$GU0 = (UH3) + (UV2·UV3·UV4)$$
$$GU1 = ((UH5·UH4·UH2·UH1)) + ((UV1·UV2·UV3) + (UV3·UV4·UV5))$$
$$GU2 = (UH4·UH2) + (UV1·UV2·UV4·UV5)$$
$$GU3 = ((UH5·UH4) + (UH2·UH1)) + ((UV1·UV2) + (UV4·UV5))$$
$$GL0 = (LH3) + (LV2·LV3·LV4)$$
$$GL1 = ((LH5·LH4·LH2·LH1)) + ((LV1·LV2·LV3) + (LV3·LV4·LV5))$$
$$GL2 = (LH4·LH2) + (LV1·LV2·LV4·LV5)$$
$$GL3 = ((LH5·LH4) + (LH2·LH1)) + ((LV1·LV2) + (LV4·LV5))$$

and
that via a logic evaluation of said eight status signals, the respective processing decision 2H-, U-, L-COMB or S-DEC and a respective proportion of comb filter processing and simple decoding of the luma and chroma output signals (L0-21, C0-21) are determined.

6. A method as claimed in claim 5, characterized in that the respective processing decision is defined by one of the following logic combinations of the eight status signals:
100% 2H-COMB and 0% S-DEC: $(GU0 · GL0)$,
100% U-COMB and 0% S-DEC: $(GU0 · \overline{GL0})$,
100% L-COMB and 0% S-DEC: $(\overline{GU0} · GL0)$,
75% 2H-COMB and 25% S-DEC: $(\overline{GU0 · GL0}) · (GU1 · GL1)$,
75% U-COMB and 25% S-DEC: $(\overline{GU0 · GL0}) · (GU1 · \overline{GU1})$,
75% L-COMB and 25% S-DEC: $(\overline{GU0 · GL0}) (GU1 · GL1)$,
50% 2H-COMB and 50% S-DEC:
$(\overline{GU0 · GL0}) · (\overline{GU1 · GL1}) · (GU2 · GL2)$,
50% U-COMB and 50% S-DEC:
$(\overline{GU0 · GL0}) · (\overline{GU1 · GL1}) · (GU2 · \overline{GL2})$,
25% 2H-COMB and 75% S-DEC:
$(\overline{GU0 · GL0}) · (\overline{GU1 · GL1}) · (\overline{GU2 · GL2}) · (GU3 · GL3)$,
25% U-COMB and 75% S-DEC:
$(\overline{GU0 · GL0}) · (\overline{GU1 · GL1}) · (\overline{GU2 · GL2}) · GU3 · \overline{GL3}$,
25% L-COMB and 75% S-DEC:
$(\overline{GU0 · GL0}) · (\overline{GU1 · GL1}) · (\overline{GU2 · GL2}) · (\overline{GU3} · GL3)$, and

13

0% COMB and 100% S-DEC:
$$(\overline{GU0} \cdot \overline{GL0}) \cdot (\overline{GU1} \cdot \overline{GL1}) \cdot (\overline{GU2} \cdot \overline{GL2}) \cdot (\overline{GU3} \cdot \overline{GL3}).$$

7. A method as claimed in claim 4, characterized in that the single-decision signals UV1 and LV1 are dependent both on the horizontally oriented gradients H1, H2 and on an absolute threshold value (= S):
UV1 = ((H1 greater than or equal to UV/4) + (UV/4 less than or equal to S) · (((H2)/4 greater than or equal to UV) + (UV less than or equal to S)) and
LV1 = ((H1) greater than or equal to LV/4) + (LV/4 less than or equal to S) · (((H2)/4 greater than or equal to LV) + (LV less than or equal to S)),
where "+" indicates an OR operation and "·" indicates an AND operation.

8. A method as claimed in claim 6, characterized in that the combed chroma signal (CC) is bandpassed before being mixed with the unprocessed chroma signal (CS), the pass-band characteristic, except for a scale factor, being defined by $(1 - z^{-2})^2$, and the sampling frequency being four times the color subcarrier frequency.

9. Circuit arrangement for carrying out a method as claimed in at least one of claims 1 to 8, characterized by the presence of the following subcircuits:
   - a gradient-measuring device (20) containing storage means and arithmetic-logic means for obtaining the gradients of the display area (27);
   - a group decision logic (30) containing the following additional subcircuits:
     -- a single-decision logic (VE) for generating the concurrent single-decision signals (UH1, UV1, LH1, LV1);
     -- storage means for simultaneously sampling at least five successive single-decision signals each containing the four concurrent single-decision signals (UHi, UVi, LHi, LVi);
     -- a logic unit (144) for forming at least eight status signals (GU0 through GU3 and GL0 through GL3) from the applied single-decision signals, and
     -- an evaluation unit (145) in which the decision as to the type of combing (2H-, U-, L-COMB) and the proportion of comb processing and simple decoding to be performed is made by logically combining the applied status signals, and
   - a luma-chroma separator (40) containing devices for performing the different types of combing, devices (218, 220) for single decoding the composite luma-chroma signal, and a chroma signal mixer (222) and a luma signal mixer (262), the different types of combing and proportions being determined by electronic switches controlled by output signals(M1, M2, S1 through S6) from the evaluation unit (145).

## Revendications

1. Procédé de filtrage en peigne sur deux lignes des composantes de luminance et de chrominance (luminance = luminosité, chrominance = couleur) dans un mélange exploré d'un signal de télévision, qui correspond notamment à la norme de télévision en couleurs NTSC et est exploré et numérisé au moyen d'une fréquence égale au quadruple de la fréquence porteuse auxiliaire couleur, selon lequel
   - dans une zone d'évaluation, un certain nombre de gradients verticaux, horizontaux et diagonaux sont fixés, la zone d'évaluation détectant, dans la direction verticale, des points d'image de trois lignes superposées,
   - au moyen d'une analyse de gradients, une décision est prise indiquant si un filtrage en peigne sur deux lignes (=2H-COMB), un filtrage en peigne supérieur (=U-COMB), un filtrage en peigne inférieur (=L-COMB) ou un décodage simple (=S-DEC) doit être exécuté,
   caractérisé par les caractéristiques suivantes :
   - la zone d'évaluation (27) englobe, d'une manière comptée à partir d'un point d'image central (CT), dans la direction horizontale, respectivement au moins trois points d'image dans la ligne supérieure et dans la ligne inférieure, et au moins cinq points d'image dans la ligne médiane,
   - tous les points d'image, qui entourent directement le point d'image central (CT), sont détectés au moins au moyen respectivement de l'un des gradients,
   - les gradients diagonaux sont formés entre des points d'image ayant une même position de phase,
   - la décision concernant le procédé de filtrage en peigne qui doit être utilisé pour le point d'image devant être respectivement soumis à un filtrage en peigne, est prise au moyen d'une décision individuelle (VE) et une décision de groupe (GE),
- la décision individuelle respective (VE) est prise au moyen de l'évaluation de critères prédéterminés de similitude des points d'image non filtrés de la zone d'évaluation (27) pour un contenu instantané de l'image, et
- la décision proprement dite de traitement, indiquant quel procédé de filtrage en peigne doit être utilisé pour le point d'image devant subir le filtrage en peigne, est prise au moyen de la décision de groupe (GE), qui représente une évaluation de décisions individuelles successives (VE) pour des contenus d'image successifs.

2. Procédé suivant la revendication 1, caractérisé en ce que les signaux de sortie de luminance et de chrominance (LO-21, CO-21) sont formés par la réunion de composantes de signaux du procédé respectif de filtrage en peigne et du décodage simple, le taux de mélange respectif étant déterminé conjointement par la décision de groupe (GE).

3. Procédé suivant la revendication 1, caractérisé par les caractéristiques suivantes :
   - la zone d'évaluation (27) contient, selon une disposition côte-à-côte, trois points d'image (12, 13, 14) sur la ligne supérieure, cinq points d'image (21, 22, 23, 24, 25) sur la ligne médiane, et trois points d'image (32, 33, 34) sur la ligne inférieure, les points d'image médians (13, 23, 33) (= point d'image supérieur, = point d'image central, = point d'image inférieur) (UT, CT, LT)) de l'ensemble des trois lignes sont alignés verticalement, et
   - à partir des valeurs non filtrées des signaux vidéo des différents points d'image, on forme les gradients suivants en tant que grandeurs de valeurs absolues :
     Gradient U1 à partir des points d'image 13 et 25,
     Gradient U2 à partir des points d'image 13 et 21,
     Gradient U3 à partir des points d'image 12 et 24,
     Gradient U4 à partir des points d'image 14 et 22,
     Gradient L1 à partir des points d'image 25 et 33,
     Gradient L2 à partir des points d'image 21 et 33
     Gradient L3 à partir des points d'image 24 et 32,
     Gradient L4 à partir des points d'image 22 et 34,
     Gradient UV à partir des points d'image 13 et 23,
     Gradient LV à partir des points d'image 23 et 33,
     Gradient H1 à partir des points d'image 21 et 25, et
     Gradient H2 à partir des points d'image 22 et 24.

4. Procédé suivant la revendication 3, caractérisé en ce que dans le cas de la décision individuelle à partir des gradients, on forme quatre signaux isochrones de décision individuelle suivants :
   $UH1 = ((H1)/2$ supérieur/égal à $(U1 + U2)/4) + ((H1)/2$ supérieur/égal à $(U3 + U4)/4)$,
   $UV1 = (H1$ supérieur/égal à $UV/4).((H2)/4$ supérieur/égal à $UV)$
   $LH1 = ((H1)2$ supérieur/égal à $(L1 + L2)/4) + ((H1)/2$ supérieur/égal à $(L3 + L4)$ et
   $LV1 = (H1$ supérieur/égal à $LV/4).((H2)/4$ supérieur/égal à $LV)$, "+" désignant une combinaison OU et "." désignant une combinaison ET.

5. Procédé suivant la revendication 4, caractérisé en ce
   - qu'à partir de cinq signaux successifs de décision individuelle, qui sont constitués chacun par les quatre signaux isochrones de décision individuelle (UHi, UVi, LHi, LVi), sont formés, pour la décision de groupe (GE), les huit signaux d'états suivants, qui définissent un état local et temporel de similitude du signal vidéo au voisinage du point d'image (21) devant être soumis au filtrage en peigne :
$$GU0 = (UH3) + (UV2 \cdot UV3 \cdot UV4)$$
$$GU1 = ((UH5 \cdot UH4 \cdot UH2 \cdot UH1)) + ((UV1 \cdot UV2 \cdot UV3) + (UV3 \cdot UV4 \cdot UV5))$$
$$GU2 = (UH4 \cdot UH2) + (UV1 \cdot UV2 \cdot UV4 \cdot UV5)$$
$$GU3 = ((UH5 \cdot UH4) + (UH2 \cdot UH1)) + ((UV1 \cdot UV2) + (UV4 \cdot UV5))$$
$$GL0 = (LH3) + (LV2 \cdot LV3 \cdot LV4)$$
$$GL1 = ((LH5 \cdot LH4 \cdot LH2 \cdot LH1)) + ((LV1 \cdot LV2 \cdot LV3) + (LV3 \cdot LV4 \cdot LV5))$$
$$GL2 = (LH4 \cdot LH2) + (LV1 \cdot LV2 \cdot LV4 \cdot LV5)$$
$$GL3 = ((LH5 \cdot LH4) + (LH2 \cdot LH1)) + ((LV1 \cdot LV2) + (LV4 \cdot LV5))$$
et
que la décision respective de traitement 2H-COMB, U-COMB, L-COMB ou S-DEC est une composante respective de mélange obtenue à partir du filtrage en peigne et du décodage simple des signaux de sortie de luminance et de chrominance (L0-21, C0-21) sont déterminées au moyen d'une évaluation logique de ces huit signaux d'état.

6. Procédé suivant la revendication 5, caractérisé en ce que la décision respective de traitement est définie par l'une des combinaisons logiques suivantes des huit signaux d'état :

2H-COMB avec 100 % et S-DEC avec 0 %: (GU0.GL0),

U-COMB avec 100 % et S-DEC avec 0%: (GU0.$\overline{GL0}$),

L-COMB avec 100 % et S-DEC avec 0 % ($\overline{GU0}$.GL0),

2-H-COMB avec 75 % et S-DEC avec 25%: ($\overline{GU0.GL0}$).(GU1.GL1),

U-COMB avec 75 % et S-DEC avec 25 %: ($\overline{GU0.GL0}$).(GU1.$\overline{GL1}$),

L-COMB avec 75 % et S-DEC avec 25%: ($\overline{GU0.GL0}$).($\overline{GU1}$.GL1),

2H-COMB avec 50 % et S-DEC avec 50%: ($\overline{GU0.GL0}$) . (GU1.$\overline{GL1}$) . (GU2.GL2),

U-COMB avec 50 % et S-DEC avec 50%: ($\overline{GU0.GL0}$).($\overline{GU1.GL1}$).(GU2.$\overline{GL2}$),

L-COMB avec 50 % et S-DEC avec 50%: ($\overline{GU0.GL0}$).($\overline{GU1.GL1}$).($\overline{GU2}$.GL2),

2H-COMB avec 25 % et S-DEC avec 75%: ($\overline{GU0.GL0}$).($\overline{GU1.GL1}$).($\overline{GU2.GL2}$).(GU3.GL3),

U-COMB avec 25 % et S-DEC avec 75%: ($\overline{GU0.GL0}$).($\overline{GU1.GL1}$).($\overline{GU2.GL2}$).(GU3.$\overline{GL3}$),

L-COMB avec 25 % et S-DEC avec 75%: ($\overline{GU0.GL0}$).($\overline{GU1.GL1}$).($\overline{GU2.GL2}$).(GU3.GL3) et

COMB avec 0 % et S-DEC avec 100%: ($\overline{GU0.GL0}$).($\overline{GU1.GL1}$).($\overline{GU2.GL2}$).($\overline{GU3.GL3}$).

7. Procédé selon la revendication 4, caractérisé en ce que les signaux de décision individuelle (UV1 et LV1) dépendent aussi bien des gradients (H1,H2) orientés horizontalement que d'une valeur de seuil absolue (=S) :

UV1 = ((H1 supérieur/égal à UV/4) + (UV/4 inférieur/égal à S). (((H2)/4 supérieur/égal à UV) + (UV inférieur/égal à S)) et

LV1 = ((H1 supérieur/égal à LV/4) + (LV/4 inférieur/égal à S)).(((H2)/4 supérieur/égal à LV)+(LV inférieur/égal à S)),

"+" désigant une combinaison OU et "." désignant une combinaison ET.

8. Procédé suivant la revendication 6, caractérisé en ce que le signal de chrominance (CC), filtré au moyen d'un filtrage en peigne, est soumis à un filtrage passe-bande avant son mélange avec le signal de chrominance simple (CS), la courbe de bande passante étant définie à un facteur d'échelle près par $(1-z^{-2})^2$ et la fréquence d'exploration correspondant au quadruple de la fréquence porteuse auxiliaire couleur.

9. Montage pour la mise en oeuvre du procédé selon au moins l'une des revendications 1 à 8, caractérisé par la présence des circuits partiels suivants :

- un dispositif de mesure de gradients (20), qui contient des dispositifs de mémoire et des dispositifs combinatoires arithmétiques pour produire les gradients de la zone d'évaluation (27),
- un circuit logique de décision de groupe (30), qui contient les autres circuits partiels suivants :
  -- une unité logique de décision individuelle (VE) servant à produire les signaux isochrones de décision individuelle (UH1, UV1, LH1, LV1),
  -- des dispositifs de mémoire pour prélever simultanément au moins cinq signaux successifs de décision individuelle, chaque signal de décision individuelle contenant les quatre signaux isochrones de décision individuelle (UHi, VHi, LHi, LVi),
  -- une unité logique (144) servant à former au moins huit signaux d'état (GU0 à GU3 et GL0 à GL3) à partir des signaux envoyés de décision individuelle, et
  -- une unité d'évaluation (145), dans laquelle la décision concernant le type respectif de filtrage en peigne (2H-, U-, L-COMB) et le taux associé de mélange est pris à partir du filtrage en peigne et du décodage simple, par l'intermédiaire de combinaisons logiques des signaux d'état envoyés, et
- un dispositif (40) de séparation des signaux de luminance et de chrominance, qui contient des dispositifs pour les différents types de filtrage en peigne, des dispositifs (218, 220) pour le décodage simple du mélange des signaux de luminance et de chrominance, et des mélangeurs (222, 262) pour le signal de chrominance et le signal de luminance, les différents types de filtrage en peigne et les différents taux de mélange étant commandés par des commutateurs électroniques à partir de signaux de sortie (M1, M2, S1 à S6) de l'unité d'évaluation (145).

FIG.1

FIG.2

FIG.3

FIG. 4

EP 0 471 700 B1

FIG. 5A

FIG. 5B

FIG. 5C

Start

①

②

③

GU0 + GL0

GU1 + GL1

GU2 + GL2

GU0 · GL0

GU1 · GL1

GU2 · GL2

$GU0 \cdot \overline{GL0}$

$GU1 \cdot \overline{GL1}$

$GU2 \cdot \overline{GL2}$

N

Y

N

Y

N

Y

N

Y

N

Y

N

Y

N

Y

N

Y

N

| 2H-COMB 1/1 |
| S-DEC     0 |

| U-COMB 1/1 |
| S-DEC    0 |

| L-COMB 1/1 |
| S-DEC    0 |

| 2H-COMB 3/4 |
| S-DEC    1/4 |

| U-COMB 3/4 |
| S-DEC   1/4 |

| L-COMB  3/4 |
| S-DEC   1/4 |

| 2H-COMB 1/2 |
| S-DEC    1/2 |

| U-COMB 1/2 |
| S-DEC   1/2 |

| L-COMB  1/2 |
| S-DEC   1/2 |

(FIG.5C) ⟶ ③

GU3+GL3 ⟨◇⟩ ⟶ N ⟶ | COMB    0 |
                                | S-DEC  1/1 |

Y

GU3·GL3 ⟨◇⟩
Y                    N    GU3·GL3̄

                    ⟨◇⟩          N
                    Y

| 2H-COMB 1/4 |   | U-COMB 1/4 |   | L-COMB 1/4 |
| S-DEC   3/4 |   | S-DEC  3/4 |   | S-DEC  3/4 |

## FIG.5D

| COMB | M1 | M2 |
|---|---|---|
| 2H - COMB | 1 | 1 |
| U - COMB | 1 | 0 |
| L - COMB | 0 | 1 |

## FIG.6

| | COMB | | | S-DEC | | |
|---|---|---|---|---|---|---|
| | S1 | S2 | S3 | S4 | S5 | S6 |
| 1/1 | 1 | 0 | 0 | 0 | 0 | 0 |
| 3/4 | 1 | 0 | 1 | 1 | 0 | 1 |
| 1/2 | 1 | 1 | 0 | 1 | 1 | 0 |
| 1/4 | 1 | 1 | 1 | 1 | 1 | 1 |
| 0 | 0 | 0 | 0 | 1 | 0 | 0 |

## FIG.7

FIG. 8

EP 0 471 700 B1